# EUROPÄISCHE PATENTSCHRIFT

(11) **EP 2 129 734 B1**
(45) Veröffentlichungstag und Bekanntmachung des Hinweises auf die Patenterteilung: **29.06.2011**
(21) Anmeldenummer: 08716935.5
(22) Anmeldetag: 19.02.2008
(51) Int. Cl.: C09J 7/02

(54) **FLEXIBLES KRAFTKLEBEBAND**
FLEXIBLE ADHESIVE TAPE
RUBAN ADHÉSIF RENFORCÉ SOUPLE

(30) Priorität: 28.03.2007 DE 102007015392
(43) Veröffentlichungstag der Anmeldung: 09.12.2009
(73) Patentinhaber: Henkel AG & Co. KGaA, 40589 Düsseldorf (DE)
(72) Erfinder: RÖNISCH, Ralf, 42349 Wuppertal (DE); SCHILLING, Gaby, 40227 Düsseldorf (DE); KLAUCK, Wolfgang, 40670 Meerbusch (DE)
(86) Internationale Anmeldenummer: PCT/EP2008/051985
(87) Internationale Veröffentlichungsnummer: WO 2008/116702

(56) Entgegenhaltungen:
- EP-A- 0 935 035
- CH-A5- 686 673

## Beschreibung

Die vorliegende Erfindung betrifft ein Klebeband insbesondere zum Zusammenfügen von mindestens zwei Gegenständen oder Schließen und Sichern einer Verpackung, umfassend ein mindestens einseitig mit einem Haftkleber beschichtetes Trägerband und einer Armierung, wobei das Klebeband eine dauerelastische Dehnbarkeit von 5 bis 80 % aufweist und durch die Armierung eine händische Dehnung in Längsrichtung von mehr als 80 % verhindert wird.

Klebebänder mit elastischen Eigenschaften sind aus dem Stand der Technik bekannt. So beschreibt die WO 2006/032340 ein elastisches Klebeband mit einer dauerelastischen Dehnbarkeit von 5 bis 50 %, das an der Längskante eine Vielzahl von Einkerbungen aufweist, die ein Durchtrennen des Klebebandes ohne Anwendung eines Werkzeugs ermöglichen. Nachteilig bei diesem Klebeband ist die Möglichkeit, dass bei der Anwendung das Klebeband über den dauerelastischen Dehnungsbereich überdehnt wird und damit eine Rückstellung auf nahezu die Ausgangslänge nicht mehr möglich ist.

Die CH 686 673 A5 beschreibt ein Klebeband, das sowohl eine longitudinale als auch eine transversale Armierung aufweist. Nachteilig bei diesem Klebeband ist, dass es in Längsrichtung nicht elastisch verformbar ist und daher nicht zum Bündeln von Gegenständen verwendet werden kann.

Es ist Aufgabe der vorliegenden Erfindung, ein Klebeband zu schaffen, das zu einer Verbesserung beim Bündeln von Gegenständen und beim Schließen oder Sichern einer Verpackung führt. Dabei soll das Klebeband insbesondere sein elastisches Rückstellvermögen bei der Anwendung beibehalten. Ferner soll die Reißfestigkeit gegenüber Klebebändern aus dem Stand der Technik verbessert werden.

Diese Aufgabe wird bei einem Klebeband der eingangs genannten Art dadurch gelöst, dass das Klebeband eine dauerelastische Dehnbarkeit von 5 bis 80 % aufweist und in das Klebeband eine Armierung eingearbeitet ist, die eine händische Dehnung in Längsrichtung von mehr als 80 % verhindert.

Gegenstand der vorliegenden Erfindung ist daher ein Klebeband, insbesondere zum Zusammenfügen von mindestens zwei Gegenständen oder Schließen und Sichern einer Verpackung, umfassend ein Trägerband, das mindestens auf einer Seite mit einem Haftkleber beschichtet ist und einer Armierung aus sich überkreuzenden Fäden mit fixierten kreuzungspunkten, dessen Fadenorientierung in einem Winkel von 20 bis 70° zur Längrichtung der Trägerbands verläuft, die dadurch gekennzeichnet ist, dass das Klebeband eine dauerelastische Dehnbarkeit von 5 bis 80 % aufweist und die Armierung eine händische Dehnung in Längsrichtung von mehr als 80% verhindert.

Unter händischer Dehnung wird im Sinne der vorliegenden Erfindung die Einwirkung einer Zugkraft von etwa 40 N auf ein 2,5 cm breites Klebeband in Längsrichtung verstanden.

Derartige Klebebänder werden vorzugsweise auf Rollen mit beispielsweise 5,10, 25 oder auch 50 m Klebebandlänge hergestellt. Die erfindungsgemäßen Klebebänder können in beliebigen Breiten und Längen hergestellt werden. So ist es insbesondere zum Verschließen einer Verpackung möglich, ein Klebeband mit beispielsweise 0,5 oder 1 cm Breite und 5 bis 8 cm Länge vorkonfektioniert auf einem Silikonträgerpapier zum Verschließen einer Verpackung bereitzustellen.

Die Armierung von Klebebändern mit Hilfe von Fadengelegen oder Gewebeeinlagen ist bekannt. Diese Verstärkungen dienen in der Regel dazu, die Reißfestigkeit des an sich dehnbaren Folienträgers zu erhöhen und dabei gleichzeitig die Dehnbarkeit des gesamten Klebebandes unter Anwendungsbedingungen möglichst vollständig zu eliminieren. Daher sind die Gewebeeinlagen üblicherweise aus nicht dehnbaren Polymerfasern wie beispielsweise Polyester-, Polypropylen- oder Nylonfasern. Ferner werden diese Gewebeeinlagen in Richtung der zu erwartenden Zugbelastung in die Gewebebänder eingelegt und zwar in der Art, dass die zu erwartende Zugbelastung parallel zu der Fadenrichtung der Gewebeeinlage verläuft.

Bei der vorliegenden Erfindung sollen jedoch die Gewebeeinlagen so ausgestaltet sein, dass sie eine Dehnbarkeit des elastischen Folienträgermaterials bis zu einem bestimmten Maß erlauben. Vorzugsweise soll die Gewebeeinlage so ausgestaltet sein, dass das Trägerband unter normalen Anwendungsbedingungen, insbesondere bei händischer Dehnung, nicht über den Bereich der dauerelastischen Dehnbarkeit hinaus gedehnt werden kann. Die Armierung der erfindungsgemäßen Klebebänder fungiert somit als Dehnungsbegrenzung und gleichzeitig erhöht sie die Reißfestigkeit der erfindungsgemäßen Klebebänder.

Vorzugsweise wird die dauerelastische Dehnbarkeit des Klebebandes von 5 bis 80 % und eine Dehnung in Längsrichtung von mehr als 80 % auch bei einer Zugkraft von etwa 45 N/ 2,5 cm Bandbreite, weiter bevorzugt 50 N/ 2,5 cm Bandbreite oder sogar 60 N/ 2,5 cm Bandbreite des erfindungsgemäßen Klebebandes verhindert.

Unter dauerelastischer Dehnbarkeit wird ein Trägerband verstanden, das bei einer ersten Dehnung um 30% bezogen auf die Ursprungslänge und anschließender Entspannung eine Rückstellung von mindestens 80 %, vorzugsweise mindestens 90 % insbesondere mindestens 95 % der Ursprungslänge aufweist. Im Idealfall wird bei der Entspannung eine Rückstellung auf nahezu 100 % der Ursprungslänge erreicht. Besonders bevorzugt ist es, wenn das Klebeband diese Werte für die Rückstellung auch nach der dritten Dehnung um 30 % bezogen auf die Ursprungslänge erreicht.

Das Ausmaß der Rückstellung wird auf die durch die Dehnung bewirkte Verlängerung bezogen und in Prozent angegeben. Ein Klebeband, das nach der Dehnung wieder seine ursprüngliche Länge aufweist, hat also eine Rückstellung von 100 %. Eine Rückstellung von 80 % bedeutet, dass nach der Dehnung 20 % zusätzliche Länge als permanente Verlängerung des Klebebandes erhalten bleiben.

Diese Werte für die Rückstellung sind besonders vorteilhaft, da damit die mehrfache Verwendbarkeit der erfindungsgemäßen Klebebänder sichergestellt werden kann. So kann beim Zusammenbündeln von Gegenständen das bereits mit dem Klebeband umschlossene Bündel nochmals geöffnet werden um es nachzuspannen oder um dem Bündel weitere Gegenstände hinzuzufügen. Ein gutes Rückstellverhalten vermeidet ein Ausleiern des Bandes und vermittelt dem Anwender hierdurch den Eindruck eines hochwertigen Produkts, das den mechanischen Belastungen standzuhalten vermag.

Nach einer bevorzugten Ausführungsform des erfindungsgemäßen Klebebandes beträgt die dauerelastische Dehnbarkeit des Klebebandes 10 bis 40 %. Dies ist besonders vorteilhaft, da Klebebänder mit derartigen Dehnbarkeiten nach anfänglicher leichter Dehnbarkeit bereits bei geringen Dehnungen eine Zugkraftbegrenzung zeigen. Dadurch können Klebebänder zur Verfügung gestellt werden, die zwar bei geringen Dehnungen elastisch sind, jedoch in der maximalen Längenausdehnung stärker begrenzt sind. Verwendet man solche Klebebänder zum Bündeln von Gegenständen können wegen der begrenzten Dehnung und der definierten Rückstellung weniger leicht Gegenstände aus dem Bündel herausfallen.

Gemäß einer anderen bevorzugten Ausführungsform des erfindungsgemäßen Klebebandes verhindert die Armierung eine händische Dehnung in Längsrichtung von mehr als 40 %. Dies ist besonders vorteilhaft, da dem Verbraucher bei der Anwendung der Eindruck eines festen und robusten Klebebandes vermittelt wird. Außerdem ziehen sich solche Klebebänder bei Zugbelastung seitlich nicht so stark zusammen, wodurch das Klebeband nach der Rückstellung weniger wellig wird. Damit lässt sich das Klebeband beim Bündeln von Gegenständen leichter handhaben.

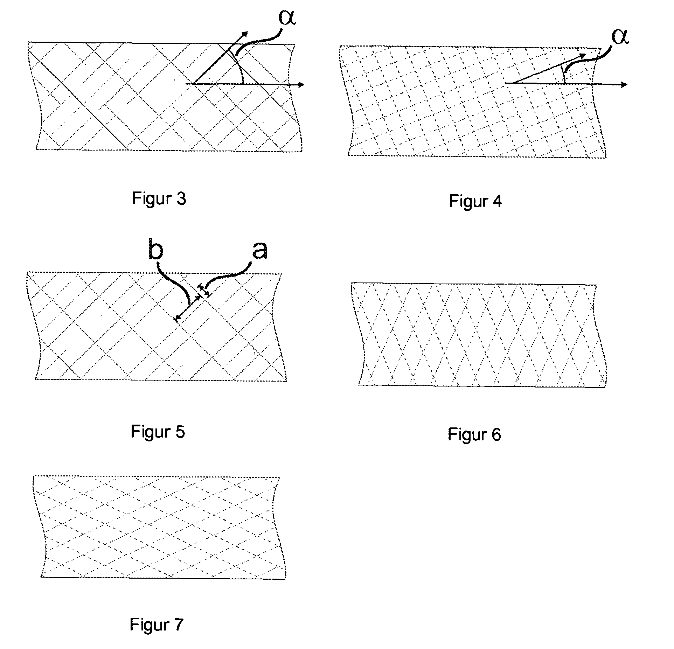

Erfindungsgemäß besteht die Armierung aus sich überkreuzenden Fäden mit fixierten Kreuzungspunkten wobei die Fadenorientierung in einem Winkel von 20 bis 70°, bevorzugt 30 bis 60°, besonders bevorzugt etwa 45° zur Längsrichtung des Trägerbandes verläuft. Die Bestimmung dieses Winkels ist Figur 3 zu entnehmen. Dieses Gewebe kann in Form eines rechteckigen oder quadratischen Gitters vorliegen, wobei es bevorzugt ist, wenn diese Fäden in Form eines quadratischen Gitters vorliegen. Dies ist besonders vorteilhaft, da eine Armierung in Gitterform sich bei geringen Dehnungswerten praktisch kaum auf das Dehnungsverhalten des Klebebandes auswirkt. Erst mit zunehmender Dehnung, also bei zunehmender Streckung des Armierungsgitters tritt die Dehnungsbegrenzung ein. Ein weiterer Vorteil von Klebebändern mit einer derartigen Armierung ist der, dass aufgrund der Lage der Armierung solcher Klebebänder ein Durchtrennen des Klebebandes ohne Anwendung eines Werkzeugs ermöglicht wird. Überraschenderweise wurde gefunden, dass die erfindungsgemäßen Klebebänder mit einer gitterartigen Armierung, insbesondere mit einer Fadenorientierung von etwa 45° sich trotz des elastischen Verhaltens ohne Anwendung eines Werkzeugs durchtrennen lassen. Damit kann der Verbraucher bei der Anwendung direkt von der Rolle die benötigte Länge Klebeband abtrennen.

Es ist ebenfalls möglich, gitterartige Armierungen einzusetzen, die in Längsrichtung des Klebebandes entweder vorgestreckt oder gestaucht sind. Dies ist von Vorteil, da mit derselben Armierung Klebebänder mit unterschiedlichen Zugbegrenzungen hergestellt werden können.

Die Fixierung der Kreuzungspunkte der Armierungsfäden kann auf unterschiedliche Weisen erfolgen. So können die Kreuzungspunkte durch Verschweißen der Fäden an der Kreuzungspunkten fixiert werden. Eine solche Armierung kann dann direkt in die Haftkleberschicht des Klebebandes eingebracht werden. Dazu wird vorteilhafterweise das Trägerband und die vorbereitete Armierung von zwei Rollen parallel aufeinander abgerollt und anschließend mit dem Haftkleber beschichtet.

Ebenso kann die Fixierung der Kreuzungspunkte dadurch erreicht werden, dass die Fäden in der gewünschten Anordnung mittels eines Kaschierklebstoffs auf das Trägerband geklebt werden. Dieser Kaschierklebstoff muss eine ausreichende Festigkeit aufweisen, dass sich die Fäden bei Zugbelastung des Klebebandes möglichst nicht verschieben können.

Nach einer anderen Methode können die Fäden in der für die Armierung gewünschten Anordnung auch direkt in das Trägerband einextrudiert werden. Auch hier ist ein Verrutschen der Kreuzungspunkte danach nicht mehr möglich.

Bevorzugt ist bei den erfindungsgemäßen Klebebändern, die eine gitterartige Armierung aufweisen, wenn diese in Querrichtung über die Breite des Klebebandes wenigstens 3, insbesondere wenigstens 4, ganz besonders bevorzugt wenigstens 5 oder gar wenigstens 7 Kreuzungspunkte aufweisen. Figur 3 zeigt ein Klebeband mit 5 Kreuzungspunkten in Querrichtung des Bandes. Damit ist sichergestellt, dass die Maschengröße so auf die Breite des Klebebandes abgestimmt ist, dass die Armierung den technischen Zweck der Zugkraftbegrenzung einerseits und Verbesserung der Reißfestigkeit andererseits erfüllt. Dies ist bei den oben angegebenen Verhältnissen erfüllt. Dadurch ist es möglich Rollen des erfindungsgemäßen Klebebandes von sogenannten Masterrollen abzuschneiden, ohne dass exakt auf die Lage der Armierung beim Ansetzen des Schnittes geachtet werden muss. Bei einer Anzahl von weniger als 3 Kreuzungspunkten in Querrichtung des Bandes könnte es ansonsten bei einem solchen Herstellprozess dazu kommen, dass die Klebebandrollen nach dem Abschneiden von der Masterrolle unterschiedliches Dehnungsverhalten zeigen würden. Bei der oben angegebenen Mindestanzahl an Kreuzungspunkten werden derartige fertigungsbedingte Abweichungen vernachlässigbar.

Die Armierungen können nach dem Fachmann geläufigen Verfahren in das erfindungsgemäße Klebeband eingebracht werden. Insbesondere kann die Armierung auf das Trägerband aufkaschiert, in das Trägerband einextrudiert oder in den Haftkleber eingelegt werden.

Das Material des Trägerbandes kann aus einer Vielzahl von polymeren Materialien ausgewählt werden. Als Beispiele seien genannt Polyolefine, wie Polyethylen, einschließlich HDPE (Polyethylen hoher Dichte), Polyethylen niedriger Dichte, lineares Polyethylen niedriger Dichte und lineares Polyethylen sehr niedriger Dichte, Polypropylen und Polybutylen, Polyurethane, Vinyl-Copolymere, wie Poly(vinylchlorid) und Poly(vinylacetat), insbesondere weichgemachtes Poly(vinylchlorid); olefinische Copolymere, wie Ethylen/Methacrylat-Copolymere, Ethylen/Vinylacetat-Copolymere, Acrylnitril-Butadien-Styrol-Copolymere und Ethylen/Propylen-Copolymere; acrylische Polymere und Copolymere und Kombinationen dieser Materialien. Coextrudate, Mischungen und Blends von Kunststoffen oder von Kunststoff- und Elastomer-Materialien, wie Polypropylen/Polyethylen, Polyurethan/Polyolefin, Polyurethan/Polycarbonat und Polyurethan/Polyester können auch verwendet werden.

Bei dem erfindungsgemäßen Klebeband wird eine möglichst vollständige Rückstellung nach einer Dehnung angestrebt. Vorteilhaft besteht daher das Trägerband aus einem gummielastischen Material. Besonders bevorzugt wird ein thermoplastisches Elastomer, insbesondere ein Material, das ausgewählt ist aus der Gruppe bestehend aus Polyestern, Polyvinylchloriden, Polyamiden, Polyurethanen, Styrolcopolymeren und Polyolefinen. Diese sind sofern nicht von sich aus bereits gummielastisch mit einem Weichmacher versehen. Die Auswahl des für den einzelnen Anwendungszweck am besten geeigneten Trägermaterials, insbesondere in Bezug auf dessen Elastizität, kann der Fachmann durch wenige Versuche ermitteln.

Die Armierung des erfindungsgemäßen Klebebandes kann aus den dem Fachmann für die Armierung von Klebebändern bekannten Materialien bestehen. Bevorzugt sind praktisch nicht dehnbare Materialien wie Fäden aus Polyester oder Polyamid, insbesondere Nylon, Perlon oder Aramid, Polypropylen, LD-Polyethylen. Diese Fäden können gedrillt oder auch extrudiert sein, wobei extrudierte Fäden aus Polypropylen bevorzugt sind, da sich diese leicht verschweißen lassen, um eine Armierung mit fixierten Kreuzungspunkten herzustellen.

Die Armierung weist eine auf die angestrebten Anwendungsverhältnisse angepasste Fadendicke auf. Dabei wird die Fadendicke in Abhängigkeit der Reißfestigkeit des Fadenmaterials und der erforderlichen Belastbarkeit des mit dieser Armierung versehenen Klebebandes ausgewählt. Typische Fadendurchmesser liegen zwischen 30 und 500 µm, bevorzugt zwischen 50 und 300 µm, besonders bevorzugt 100 bis 200 µm.

Die Dicke des Trägerbandes variiert entsprechend dem Anwendungsgebiet. Für manuelle Anwendungsgebiete, d. h. für Zwecke des täglichen Bedarfs, wird eine Dicke des Trägerbandes von 10 bis 250 µm, insbesondere 30 bis 150 µm bevorzugt.

Die Dicke der Klebstoffschicht kann im Bereich von 5 µm bis 1000 µm variieren. Vorzugsweise wird eine Schichtdicke von 20 µm bis 250 µm verwendet.

Der auf dem Trägerband angeordnete Haftkleber wird vorteilhaft ausgewählt aus der Gruppe bestehend aus Acrylaten, Kautschuk, Synthesekautschuk, Polyurethanen und Siliconen.

Die Klebstoffe auf Basis von Acrylaten können aus einer wässerigen Matrix oder aus einem Lösungsmittel beschichtet werden, es kann sich z. B. um Copolymere von Isooctylacrylat und Acrylsäure handeln. Als Synthesekautschuk kommen z. B. Polyisoprene, Polybutadien, Styrol-Isopren-Styrol- und Styrol-Butadien-Styrol-Blockcopolymere und andere Elastomere in Frage. Die erfindungsgemäß eingesetzten siliconbasierenden Haftklebstoffe beinhalten zum Beispiel Siloxane und Silanole. Haftklebstoffe können als Feststoffe oder als Lösung oder in Form von Dispersionen vorliegen.

Vorteilhaft ist die Klebebeschichtung mit einem Flächengewicht von 10 bis 200 g/m², vorzugsweise von 30 bis 150 g/m² auf das Trägerband aufgetragen.

Die auf mindestens einer Seite aufgebrachte Haftkleberbeschichtung kann vollflächig sein. Es ist aber auch möglich, dass nur eine partielle Beschichtung vorliegt. Beispielsweise kann die Beschichtung mit Haftkleber streifenförmig oder punktförmig aufgebracht sein. Hierdurch kann der Klebstoffverbrauch reduziert werden. Wesentlich ist es aber, dass ein zum zuverlässigen Fixieren des Klebebandes ausreichender Flächenanteil mit Haftkleber beschichtet ist.

Nach einer weiteren bevorzugten Ausführungsform ist das Klebeband so ausgestaltet, dass es ein Durchtrennen des Klebebandes ohne Anwendung eines Werkzeugs ermöglicht. Dazu können an mindestens einer Längsseite des Klebebandes Einkerbungen vorgesehen sein. Diese Einkerbungen sind vorteilhaft dreieckig oder halbkreisförmig ausgebildet. Um ein Durchtrennen des Bandes an einer beliebigen Stelle zu ermöglichen, sind die Einkerbungen in geringem Abstand voneinander angeordnet, vorzugsweise ohne Zwischenräume unmittelbar benachbart.

Nach einer weiteren Ausführungsform des erfindungsgemäßen Klebebandes mit einem dauerelastischen Trägerband, einer Armierung und einer wenigstens einseitigen Haftkleberbeschichtung wird durch die Armierung eine händische Dehnung des Trägers über den Dehnungsbereich der wenigstens 80 %igen, bevorzugt 90 %igen, insbesondere 95 %igen Rückstellung verhindert. Dies ist besonders vorteilhaft, weil dadurch die mehrfache Verwendbarkeit des erfindungsgemäßen Klebebandes ermöglicht wird, ohne dass das Klebeband wegen Zugüberlastung zum Beispiel durch den Anwender beim Bündeln von Gegenständen und dadurch hervorgerufene Überdehnung ausleiert und nicht mehr verwendet werden kann.

Die Armierung kann dabei individuell auf das Trägerband angepasst werden, so dass ein händisches Überdehnen praktisch nicht möglich ist. Diese Anpassung kann beispielsweise durch die Art der eingesetzten Armierung erreicht werden. So lassen grobmaschigere Armierungen einen größeren Dehnungsbereich zu als feinmaschigere Armierungen. Ferner kann auch bei praktisch gleicher Maschengröße die Armierung durch Stauchung oder Vorstrecken der Maschen in Längsrichtung des Klebebandes an die gewünschte Zugkraftbegrenzung angepasst werden. Dabei führt ein Vorstrecken der Maschen wie in Figur 7 dargestellt zu einem früheren Einsetzen der Zugkraftbegrenzung, also niedrigeren prozentualen Dehnungen und eine Stauchung wie in Figur 6 dazu, dass die Zugkraftbegrenzung erst bei größeren prozentualen Dehnungen einsetzt.

Das erfindungsgemäße Klebeband erlaubt das Zusammenbinden der verschiedenartigsten Gegenstände. So können z. B. alltägliche, in Supermärkten in loser Form angebotene Gegenstände, wie Flaschen, Dosen, Pappschachteln etc. zusammengebunden und auf sehr einfache Weise weggetragen werden. Dies kann sowohl durch den Kunden als auch durch den Händler erfolgen, der bereits in seinem Angebot eine bestimmte Anzahl dieser Gegenstände zusammenbindet und sie als Einheit anbietet, wie z. B. mehrere Getränkedosen und Flaschen in zusammengebundener Form.

Das Trägerband weist eine lösemittelfreie oder lösemittelhaltige Haftklebemasse auf, welche z. B. durch Coextrusion, Rakel-, Düsen-, Walzen- oder Vorhangbeschichtung aus der Lösung, der Dispersion oder der Schmelze erzeugt wird, wobei diese Klebemasse mittels einer Flamm- oder Coronavorbehandlung oder einer Haftvermittlerschicht, welche durch Coextrusion oder Beschichtung aufgebracht wird, mit der Oberfläche des Trägerbandes verankert sein kann. Die Armierung kann dabei während des Herstellprozesses in den Haftkleber eingelegt werden. Dazu werden Trägerband und das gegebenenfalls oberflächenbehandelte Trägerband von zwei parallel laufenden Rollen abgewickelt, mit dem Haftlebstoff beschichtet und mit Druck durch Anwalzen aufeinander fixiert. Dabei muss die Spannung des Trägerbandes und der Armierung während der Fertigung so gering gehalten werden, dass nicht bereits während des Fertigungsprozesses eine Dehnung der Materialien auftritt. Bei der Herstellung von Klebebändern mit vorgestreckten Armierungen kann diese Vorstreckung in diesem Fertigungsschritt durch Erhöhung der Spannung auf der Armierungsrolle beim Abrollen erreicht werden. Bei sehr leicht dehnbaren Trägerbändem können diese auch mit einer auf der der Armierung abgewandten Seite angebrachte Schutzschicht versehen sein, die ein Dehnen des Trägerbandes verhindert. Diese Schutzschicht kann beispielsweise aus Papier oder einer Polyesterfolie bestehen. Diese wird dann nach Bedarf nach wieder entfernt.

Ebenso kann die Armierung auch in einem ersten Schritt mittels eines Kaschierklebstoffs auf das ggf. wie oben beschrieben zur Haftverbesserung vorbehandelte Trägerband aufgeklebt werden. Der Haftklebstoff wird dann in einem zweiten Schritt aufgebracht.

Schließlich kann auch ein Trägerband, in das die oben beschriebenen Armierungen direkt beim Extrusionsvorgang eingebracht wurden, direkt oder nach den oben beschriebenen Vorbehandlungen zur Haftverbesserung mit dem Haftklebstoff beschichtet werden. Vorteilhaft bei dieser Ausführungsform ist, dass der Klebstoffauftrag geringer ausfallen kann, da der Klebstoff im Falle des innen armierten Trägerbandes nicht die aufliegende Armierung überdecken muss.

Das mit dem Haftklebstoff beschichtete Klebeband kann dann anschließend mit einem so genannten Release-Liner versehen werden, zum Beispiel einem silikonisierten Papier oder einer silikonisierten Folie. Danach kann das Klebeband auf die gewünschte Breite geschnitten werden, gegebenenfalls auch mit einem Zackenmesser, wenn Randeinkerbungen gewünscht sind, damit das Band später ohne Einsatz eines Werkzeugs abgetrennt werden kann. Der Release-Liner sollte aus einem nicht-dehnbaren Material bestehen, um ein Dehnen des Klebebandes während des Scheidvorgangs zu unterbinden.

Es ist ebenfalls möglich, das mit dem Haftklebstoff versehene Klebeband direkt auf breite Rollen, so genannte Masterrollen, aufzuwickeln und diese Masterrollen anschließend auf die gewünschte Rollenbreite abzuschneiden.

Im Folgenden wird die Erfindung anhand eines Ausführungsbeispiels näher erläutert.

### Beispiel:

Mit Hilfe einer Rakelvorrichtung (KBS Beschichtungstisch BT-CMOH240T200) wird ein Schmelzklebstoff (synthetisches Kautschukklebesystem, Technomelt PS 8746) mit zwei verschiedenen Auftragsgewichten auf ein beidseitig silikonisierte 36 my PET-Folie als Transferfolie auf eine Fläche von 20 cm Breite und 30 cm Länge aufgetragen. Dabei werden folgende Beschichtungsparameter gewählt:
Beschichtungsgeschwindigkeit: 1600 mm/min; Temperatur Platte: 100°C;
Temperatur: Rakel: 200°C; Temperatur Klebstoffschmelze vor der Beschichtung:
180°C; Auftragsgewichte: 20 g/m² und 60 g/m²

Die Beschichtungen werden bei 23°C / 50% relative Luftfeuchte für 5 min abgekühlt.

Die Beschichtung mit 20 g/m² Auftragsgewicht wird auf eine weichmacherhaltige LDPE Folie mit 80 µm Dicke (Fa. Huhtamaki) mit einer Anpressrolle per Hand aufgebracht. Auf den aufgebrachten Klebstoff wird ein symmetrisches Gelege mit verschweißten Kreuzungspunkten und einer Maschenweite von etwa 5 mm aus extrudiertem Polypropylen (Tenax C800-42), Dicke der Fäden etwa 150 µm in einem Winkel von 45° aufgebracht.

Auf das aufgebrachte Gelege wird die Beschichtung mit 60 g/m² Auftragsgewicht mit einer Anpressrolle per Hand aufkaschiert.

Das Klebeband wird für einen Tag bei 23°C / 50% relative Luftfeuchtigkeit gelagert.

### Zugtest:

Das im Beispiel beschriebene Klebeband wird einem Zugtest unterworfen. Zum Vergleich wird ein ebenfalls mit demselben Klebstoffauftrag beschichtetes identisches Trägerband vermessen, auf das jedoch keine Armierung aufgebracht ist.

### Messmethode:

Die Messung der Dehnung erfolgt mittels einer Zugprüfmaschine Zwick Z01 0 mit einem Messkopf 500 N, einer Prüfkörperhalterung aus pneumatischen Backen. Dazu wird ein ca. 15 cm langes Stück Klebeband an den jeweiligen Enden auf einer Länge von 2,5 cm durch Aufkleben auf einen Holzprüfkörper und weiterem Überkleben mit einem Gewebeband verstärkt und so in die Zugprüfmaschine eingespannt, dass die Backen einen Abstand von 10 cm aufweisen, was der Zugmessstrecke entspricht.

Die Verstärkung dient dabei zur Verhinderung des teilweisen Herausrutschens des Klebebandes aus den Spannbacken der Zugprüfmaschine, was zu einer Verfälschung der Messergebnisse führen würde. Danach wird das Klebeband mit einer Zuggeschwindigkeit von 300 mm/min auseinander gezogen und mittels der Steuersoftware testxpert das Zugkraft/ Dehnungsverhalten aufgenommen. Bei mehrfach hintereinander durchgeführten Dehnungsversuchen beträgt die Zeit zwischen dem Ende des vorangegangenen und dem Beginn des folgenden Messdurchlaufs etwa 5 Sekunden.

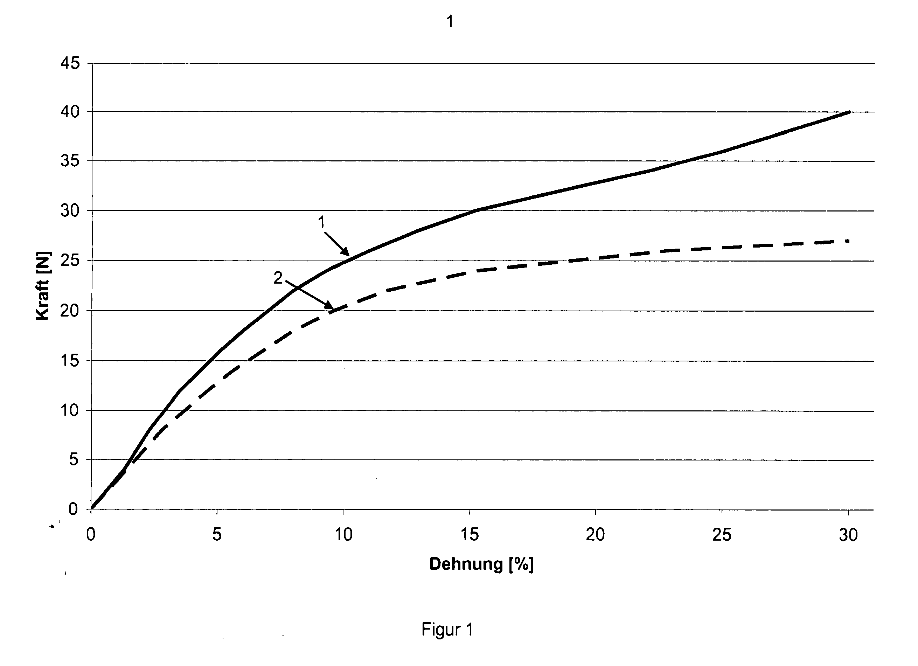

Figur 1 zeigt den Vergleich elastischer Klebebänder anhand von Zugkraft/Dehnungsdiagrammen wobei Kurve 1 das Zugverhalten des oben dargestellten erfindungsgemäßen Ausführungsbeispiels mit Armierung und Kurve 2 dasselbe Klebeband ohne Armierung als Vergleichsbeispiel zeigt. Deutlich erkennbar ist der für die gleiche Dehnung erforderliche Kraftaufwand und ein Einsetzen der Zugkraftbegrenzung beim erfindungsgemäßen Klebeband ab etwa 22-23 % Dehnung.

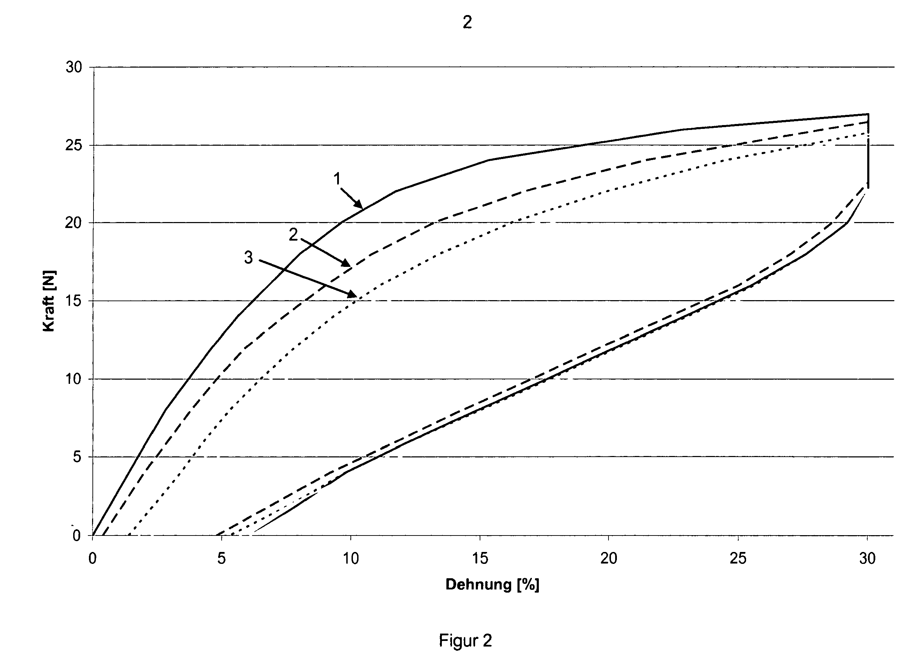

Figur 2 zeigt Zugkraft/Dehnungsdiagramme von drei sukzessiven Messungen (Kurve 1 = 1. Messung, Kurve 2 = 2. Messung, Kurve 3 = 3. Messung) an dem erfindungsgemäßen Klebeband gemäß oben genanntem Ausführungsbeispiel. Zwischen den einzelnen Messungen lag eine Pause von etwa 5 Sekunden. Deutlich zu erkennen ist, dass das Klebeband trotz beträchtlicher Dehnung bis zum Beginn der dritten Zugbelastung etwa nur 2 % länger geworden ist, also eine Rückstellung von etwa 98 % zeigt.

Die Figuren 3 bis 7 zeigen verschiedene Ausführungsformen des erfindungsgemäßen Klebebandes. Die Figuren zeigen erfindungsgemäße Ausführungsformen des Klebebandes mit einer gitterartigen Armierung und fixierten Kreuzungspunkten.
Figur 3 zeigt eine Armierung, die in Bezug auf die Längsrichtung des Klebebandes eine Fadenorientierung von α=45° aufweist. Die Armierung ist symmetrisch, d.h. ein quadratisches Gitter.
Figur 4 zeigt ebenfalls die Armierung mit einem quadratischen Gitter, jedoch einem Winkel zwischen Fadenorientierung und Längsrichtung des Klebebandes von etwa α=22 °.
Figur 5 beschreibt ein unsymmetrisches Gitter, mit einem Winkel von α=45°. Die Längen zwischen 2 Kreuzungspunkten sind richtungsabhängig verschieden (a < b).

Die Figuren 6 und 7 zeigen gitterartige Armierungen, die gestaucht sind (Figur 6) oder gestreckt (Figur 7).

## Patentansprüche

1. Klebeband, umfassend ein Trägerband, das mindestens auf einer Seite mit-einem Haftkleber beschichtet ist und eine Armierung, **dadurch gekennzeichnet, dass** die Armierung aus sich überkreuzenden Fäden mit fixierten Kreuzungspunkten besteht und dessen Fadenorientierung in einem Winkel von 20 bis 70° zur Längsrichtung des Trägerbandes verläuft, das Klebeband eine dauerelastische Dehnbarkeit von 5 bis 80 % aufweist, wobei unter dauerelastischer Dehnbarkeit verstanden wird, dass bei einer ersten Dehnung um 30% bezogen auf die Ursprungslänge und anschließender Entspannung eine Rückstellung von mindestens 80 % erreicht wird und diese Rückstellung auch nach der dritten Dehnung um 30 % bezogen auf die Ursprungslänge erreicht wird, und die Armierung eine händische Dehnung in Längsrichtung von mehr als 80% verhindert, wobei unter händischer Dehnung die Einwirkung einer Zugkraft von etwa 40 N auf ein 2,5 cm breites Klebeband in Längsrichtung verstanden wird.

2. Klebeband nach Anspruch 1, **dadurch gekennzeichnet, dass** die dauerelastische Dehnbarkeit 10 bis 40 % beträgt.

3. Klebeband nach Anspruch 2, **dadurch gekennzeichnet, dass** die Armierung eine händische Dehnung in Längsrichtung von mehr als 40 % verhindert.

4. Klebeband nach einem der vorstehenden Ansprüche, **dadurch gekennzeichnet, dass** die Armierung auf das Trägerband aufkaschiert, in das Trägerband einextrudiert oder in den Haftkleber eingelegt ist.

5. Klebeband nach einem der vorstehenden Ansprüche, **dadurch gekennzeichnet, dass** das Trägerband aus einem thermoplastischen Elastomer besteht.

6. Klebeband nach einem der vorstehenden Ansprüche, **dadurch gekennzeichnet, dass** das Material des Trägerbandes ausgewählt ist aus der Gruppe bestehend aus Polyestern, Polyvinylchloriden, Polyamiden, Polyurethanen, Styrolcopolymeren und Polyolefinen.

7. Klebeband nach einem der vorstehenden Ansprüche, **dadurch gekennzeichnet, dass** der Haftkleber ausgewählt ist aus der Gruppe bestehend aus Acrylaten, Kautschuk, Synthesekautschuk, Polyurethanen und Siliconen.

8. Klebeband nach einem der vorstehenden Ansprüche, **dadurch gekennzeichnet, dass** der Haftkleber mit einem Flächengewicht von 10 bis 200 g/m² auf das Trägerband aufgetragen ist.

9. Klebeband nach einem der vorstehenden Ansprüche, **dadurch gekennzeichnet, dass** das Klebeband ein Durchtrennen des Klebebandes ohne Anwendung eines Werkzeugs ermöglicht.

10. Klebeband nach einem der vorstehenden Ansprüche, **dadurch gekennzeichnet, dass** durch die Armierung eine händische Dehnung des Trägers über den Dehnungsbereich der wenigstens 90% igen Rückstellung verhindert wird.

## Claims

1. An adhesive tape, comprising a supporting strip, which is coated on at least one side with a pressure-sensitive adhesive, and a reinforcement, **characterized in that** the reinforcement consists of filaments crossing each other with fixed crossing points and the filament orientation of which runs at an angle from 20 to 70° with respect to the longitudinal direction of the supporting strip, the adhesive tape has a permanent elastic extensibility from 5 to 80%, wherein by permanent elastic extensibility is meant that for a first extension of 30% with respect to the original length, followed by tension release, a recovery is achieved of at least 80% and this recovery is achieved even after the third extension of 30% with respect to the original length, and the reinforcement prevents a manual extension in the longitudinal direction of more than 80%, wherein by manual extension is meant the action of a tensile force of about 40 N on a 2.5 cm wide adhesive tape in the longitudinal direction.

2. The adhesive tape according to claim 1, **characterized in that** the permanent elastic extensibility is from 10 to 40%.

3. The adhesive tape according to claim 2, **characterized in that** the reinforcement prevents some manual extension of more than 40% in the longitudinal direction.

4. The adhesive tape according to any of the preceding claims, **characterized in that** the reinforcement is laminated on the supporting strip, is extruded into the supporting strip or inserted into the pressure-sensitive adhesive.

5. The adhesive tape according to any of the preceding claims, **characterized in that** the supporting strip consists of a thermoplastic elastomer.

6. The adhesive tape according to any of the preceding claims, **characterized in that** the material of the supporting strip is selected from the group consisting of polyesters, polyvinyl chlorides, polyamides, polyurethanes, styrene copolymers and polyolefins.

7. The adhesive tape according to any of the preceding claims, **characterized in that** the pressure-sensitive adhesive is selected from the group consisting of acrylates, rubber, synthetic rubber, polyurethanes and silicones.

8. The adhesive tape according to any of the preceding claims, **characterized in that** the pressure-sensitive adhesive is applied on the supporting strip with a basis weight from 10 to 200 g/m².

9. The adhesive tape according to any of the preceding claims, **characterized in that** the adhesive tape allows severance of the adhesive tape without applying a tool.

10. The adhesive tape according to any of the preceding claims, **characterized in that** a manual extension of the support over the extension range of at least 90% recovery is prevented by the reinforcement.

## Revendications

1. Ruban adhésif comprenant un ruban de support, qui est enduit au moins sur un côté d'un auto-adhésif, et un renforcement, **caractérisé en ce que** le renforcement est constitué par des fils qui s'entrecroisent avec des points de croisement fixes, l'orientation des fils s'étendant en formant un angle de 20 à 70° par rapport à la direction longitudinale du ruban de support, le ruban adhésif présentant une extensibilité élastique permanente s'élevant de 5 à 80 %, l'expression « extensibilité élastique permanente » signifiant qu'à un premier allongement de 30 % par rapport à la longueur initiale et à la détente ultérieure, on obtient une remise à l'état initial s'élevant à au moins 80 %, cette remise à l'état initial étant obtenue même après le troisième allongement de 30 % rapporté à la longueur initiale, le renforcement empêchant un allongement manuel dans la direction longitudinale supérieur à 80 %, l'expression « allongement manuel » désignant le fait d'exercer une force de traction d'environ 40 N sur un ruban adhésif d'une largeur de 2,5 cm, en direction longitudinale.

2. Ruban adhésif selon la revendication 1, **caractérisé en ce que** l'extensibilité élastique permanente s'élève de 10 à 40 %.

3. Ruban adhésif selon la revendication 2, **caractérisé en ce que** le renforcement empêche un allongement manuel dans la direction longitudinale, supérieur à 40 %.

4. Ruban adhésif selon l'une quelconque des revendications précédentes, **caractérise en ce que** le renforcement est contrecollé sur le ruban de support, est incorporé par extrusion dans le ruban de support ou bien est inséré dans l'auto-adhésif.

5. Ruban adhésif selon l'une quelconque des revendications précédentes, **caractérise en ce que** le ruban de support est constitué d'un élastomère thermoplastique.

6. Ruban adhésif selon l'une quelconque des revendications précédentes, **caractérise en ce que** la matière du ruban de support est choisie parmi le groupe constitué par des polyesters, des chlorures de polyvinyle, des polyamides, des polyuréthanes, des copolymères de styrène et des polyoléfines.

7. Ruban adhésif selon l'une quelconque des revendications précédentes, **caractérise en ce que** l'auto-adhésif est choisi parmi le groupe constitué par des acrylates, du caoutchouc, du caoutchouc synthétique, des polyuréthanes et des silicones.

8. Ruban adhésif selon l'une quelconque des revendications précédentes, **caractérise en ce que** l'auto-adhésif est appliqué avec un poids surfacique de 10 à 200 g/m² sur le ruban de support.

9. Ruban adhésif selon l'une quelconque des revendications précédentes, **caractérise en ce que** le ruban adhésif permet une séparation du ruban adhésif sans devoir utiliser un ustensile.

10. Ruban adhésif selon l'une quelconque des revendications précédentes, **caractérise en ce que** le renforcement empêche un allongement manuel du support au-delà de la zone d'allongement de la remise à l'état initial minimale de 90 %.
